# EUROPEAN PATENT SPECIFICATION

(11) **EP 2 242 976 B1**
(45) Date of publication and mention of the grant of the patent: **27.08.2014**
(21) Application number: 09707144.3
(22) Date of filing: 02.02.2009
(51) Int. Cl.: F27D 11/04, C25C 3/08, C25C 3/12

(54) **AN ELECTRODE FOR USE IN AN ELECTROLYSIS PROCESS FOR PRODUCTION OF ALUMINIUM**
ELEKTRODE ZUR VERWENDUNG IN EINEM ELEKTROLYSEVERFAHREN ZUR HERSTELLUNG VON ALUMINIUM
ÉLECTRODE POUR L'UTILISATION DANS UN PROCÉDÉ D'ÉLECTROLYSE POUR LA PRODUCTION DE L'ALUMINIUM

(30) Priority: 06.02.2008 NO 20080680
(43) Date of publication of application: 27.10.2010
(73) Proprietor: Norsk Hydro ASA, 0240 Oslo (NO)
(72) Inventor: HOP, Jørund, 6885 Årdalstangen (NO); VEE, Inge, Arild, 6885 Årdalstangen (NO)
(74) Representative: Berg, André
(86) International application number: PCT/NO2009/000037
(87) International publication number: WO 2009/099335

(56) References cited:
- EP-A1- 0 027 534
- WO-A2-01/63012
- GB-A- 1 082 937
- GB-A- 2 196 953
- US-A- 4 288 353
- US-A- 4 574 019

## Description

The present invention relates to a pre-baked electrode for electrolytic production of aluminium, and it can be applied both to the anode (positive electrode) and the cathode (negative electrode).

Commonly, pre-baked anodes are fixed to studs forming part of an anode hanger. The anode has pre-formed bores which allow the studs to be entered into them. The fixation between the stud and the anode is performed by pouring melted cast-iron in the annular space between each individual stud and the corresponding bore in the anode.

Similarly, for the fixation of collector bars in cathode blocks, there are preformed slots in the blocks that allow the bars to be entered into them. The space between the wall of the slots and the bars are filled with melted cast-iron.

The use of melted cast-iron has some implications with regards to investments, for instance ovens that can melt the cast-iron, and corresponding distribution and pouring system. Further, before pouring the cast-iron into the recess in the cathode, the electrode and collector bars must be pre-heated due to the large differences in temperatures between the melted metal and the electrode (room temperature). For the anode, the studs are in some technologies preheated. Other technologies involving embedding the collector bars in a contact paste, result in vapours or fumes that will be exhausted under the preheating or heating of the cathode.

A pre-baked anode is normally worn out after approx. 30 days in the cell due to the consumption of the carbon material it consists of. It then must be replaced. The worn out anode (butts) is transported to a facility where the studs of the anode hanger is cleaned by removing rest material of the anode together with cast iron residues. Commonly, this is performed by the use of mechanical frapping tools.

The operations for assembly of a new anode and removing the butts of a worn out anode are time consuming and expensive. Similar will apply for the more long lasting cathode blocks, where the collector bars and the carbon material has to be separated before disposal or recycling.

US 4 288 353 A discloses a carbon bearing contact paste for joining components in an electrolysis cell. The cold workable paste comprises a mixture of epoxy resin and tar as binder and graphite and metal in powder form as solid constituents. Before being used, an acid-free hardener e.g. is added to the paste. In Example 1 there is described a connection between an anode and a pin shaped metallic conductor where the contact paste comprises a binder component that is hardened.

US 4,574,019 relates to a process for attaching anode blocks to an anode suspension means by use of an adhesive mass. The mass should be mechanical strong and have good electrical conducting properties at least at temperatures between 900 °C and 1000°C. The adhesive mass can be a mixture of solids, a binder and a hardener. The solids can be represented by metal powder such as iron, copper or aluminium. The particle size of the metal should be 1 mm at most. This type of contact mass is further described in EP 0 027 534.

WO 01/63012 A2 discloses a method for converting Hall-Héroult cells to inert anode assemblies which replace the consumable carbon anodes of the cell. The inert anode assemblies are pre-heated prior to introduction into the operating cell. Insulation may be installed for reducing heat loss during operation of the retrofit cells. The inert anodes can be connected to connectors by brazing, sintering and mechanical fastening.

GB 2 196 953 A relates to a conductive cement for collector bar-carbon block joints of electrolytic cells that comprises an aggregate of calcined anthracite or an anthracite/graphite mixture, a settable liquid polymeric binder and a curing agent for causing the binder to set.

In accordance with the present invention there are applied electric conductive particles between the electrical current lead and the calcinated carbonaceous material in the electrode as a fill-in material. The use of electric conductive particles without a hardening matrix, facilitates the re-use of the conductive particles. Further, the electrical resistance in a cathode where the invention is applied is observed to be improved with reference to the commonly used contact paste. Similar improved results have been measured for an anode in accordance with the invention.

These and further advantages will be achieved by the invention as defined in the accompanying claims.

The present invention will in the following be further described by figures and examples where;
Fig. 1 discloses a cross-section view through a stud embedded in a bore in an anode with a first fixation means,
Fig. 2 discloses a cross-section view through a stud embedded in a bore in an anode with a second fixation means,
Fig.3 discloses a cross-section view through a yoke ready to be embedded in a bore in an anode, a third fixations means,
Fig. 4 a discloses a cathode element in accordance with the present invention,
Fig. 4b discloses a the cathode element in Fig. 4a, the current and voltage measurement set up,
Fig. 5 discloses in a diagram periodically measured resistance (µohm) between collector bar and the carbon material in a cathode,
Fig. 6a-b discloses an anode with a forth fixation means, ready to be assembled,
Fig. 7a-b discloses the anode of Figs. 6a-b in an intermediate fixing position,
Fig. 8 discloses the anode of Figs. 6a-b in its final fixation position,
Fig. 9 discloses in an end view a second embodiment of a cathode element in accordance with the present invention,
Fig. 10 discloses the voltage drop in a conventional cast iron joint and the joint as shown in Fig. 8.

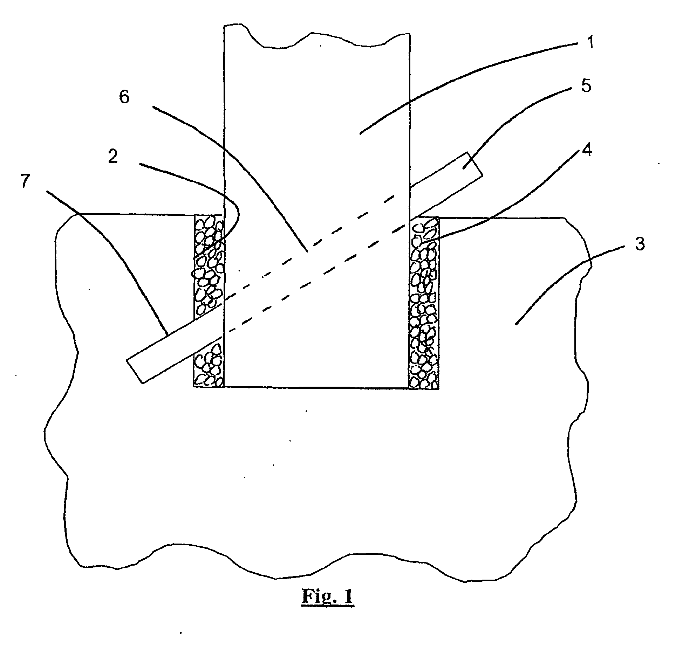

As shown in Fig. 1, there is disclosed a cross-section through a stud 1 embedded in a bore 2 in an anode 3. The bore is wider than the corresponding dimensions of the stud and the annular space between the stud and the bore is filled with electrical conducting solids or particles 4, which are steel balls in this embodiment. A spike 5 or the similar penetrates the stud through a bore 6 and is further entered into a bore 7 in the anode 3, for mechanically fixing the parts to each other. Alternatively, the spike can be replaced by a threaded bolt for better fastening grip against the stud and the bore. The bolt may conveniently have a bolt head for simpler assembly/removal (not shown).

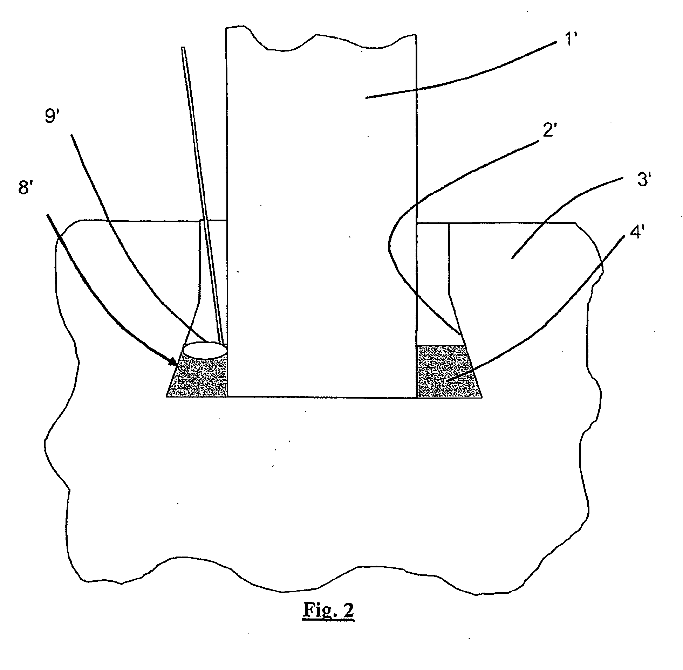

As shown in Fig. 2 there is disclosed a cross-section view through a stud 1' embedded in a bore 2' in an anode 3' with a second fixation means. The bore has a conical section 8' that diverges downwards. The space between the stud and the bore is filled with electrical conducting particles 4', which are steel balls in this embodiment. At a partial filling level, one lump of the steel balls are welded to the stud by an appropriate welding tool 9', such that the stud will be fixed with regard to the bore.

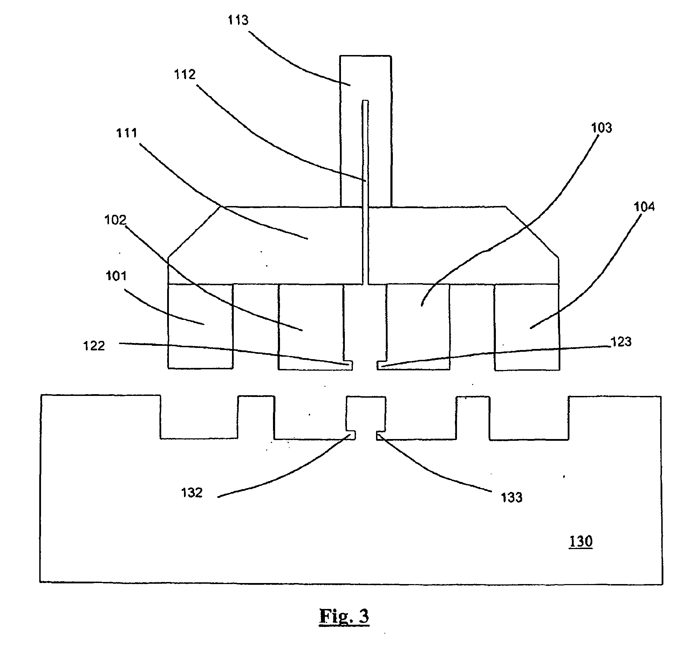

As shown in Fig. 3 there is disclosed a cross-section view through a yoke 111 connected with a beam 113. The yoke and beam both having a split 112 that allow stubs 101 and 102 to be forced apart from stubs 103 and 104. When the yoke is forced apart it can be put into place in the anode 130. When the force is removed the notches (122, 123) on stubs 102 and 103 can fit into the pre-machined recesses (132, 133) in the holes in the anode 130.

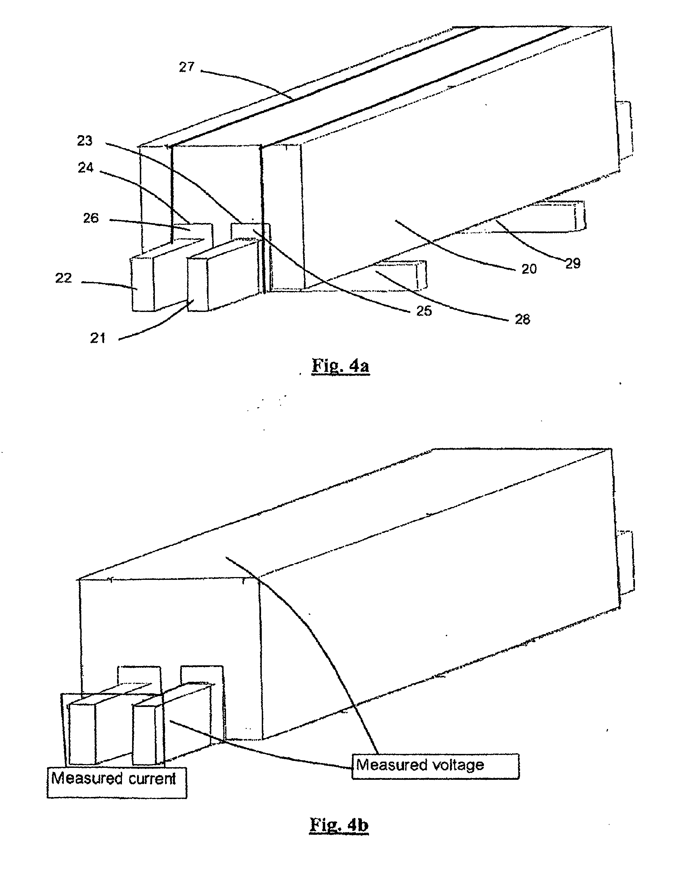

Fig. 4a discloses a cathode element 20 in accordance with the present invention, where the cathode element is resting temporary upon two support logs (28, 29). The element has two longitudinal slots 23, 24 where collector bars 21, 22 are inserted. The space between each collector bar and the corresponding slot is filled with electrical conducting particles (not shown). Closure lids 25, 26 seal off the space at the end of the element while similar lids are applied in the bottom and at the other end of the cathode element as well (not shown). A temporary fixation system keeps the individual elements in place until final assembly in an electrolysis cell.

In Fig. 4b there is disclosed how the voltage and current measurements are carried out in the trials. The resistance is calculated from the measured voltage divided by the measured current.

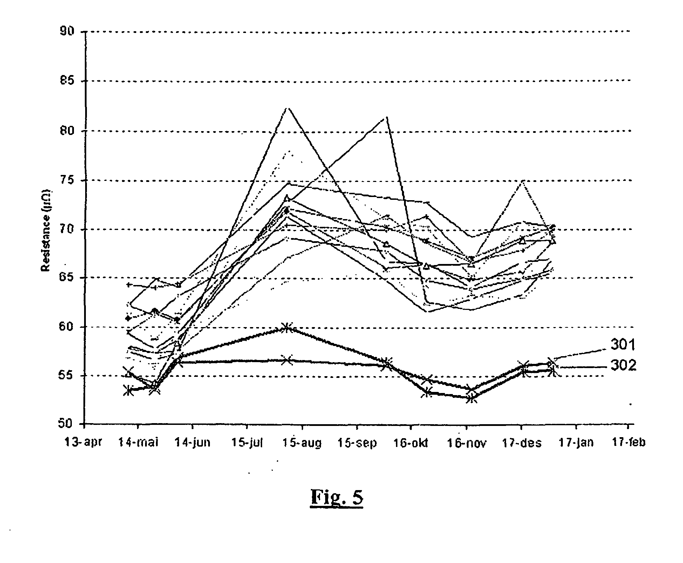

In Fig. 5 there is disclosed measured resistance between one collector bar and the calcinated carbon material in a cathode block, having said collector bar embedded into it. In the trial, two parallel measurements has been carried out in accordance with the principles of the present invention.

As can be seen from the Figure, the resistance measured for collector bar embedded in accordance with the principles of the present invention, is represented by the two lowermost curves (301, 302).

The resistance from the top of the block to the end of the steel is for the four steels measured to between 50 and 60 µΩ which are within the accuracy of the measurement equipment. These trials lasted approximately 8 months, and from the diagram it can be seen that the resistance is relative stable. The curves above these curve relates to reference cathodes in the same aluminium cell with contact paste as contact medium.

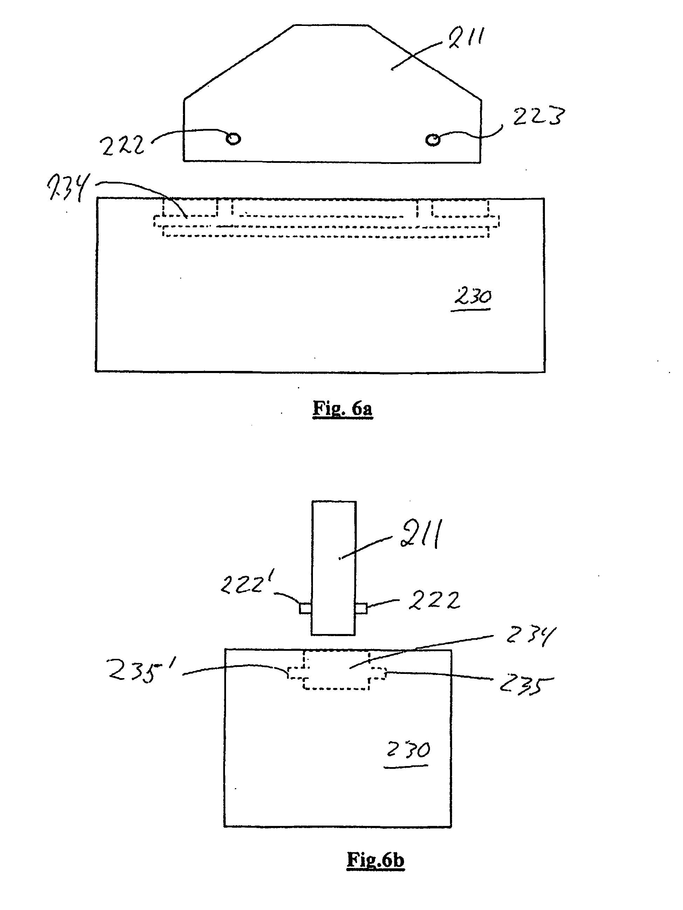

In Figs. 6a there is disclosed a yoke part 211 (its suspender is not shown here) provided with a set of fixation means 222, 223 that corresponds with a recess 234 made in an anode block. Fig. 6b which is a side view of Fig. 6a, discloses the fixation means 222 that has one similar fixation means 222' at the opposite side thereof. The similar applies at fixation means 223, but this is not shown here. As can be seen from Fig. 6b, the yoke part 211 can be allowed to enter the recess 234, while the fixation means 222, 223 are arranged to be mating the recesses 235, 235' respectively.

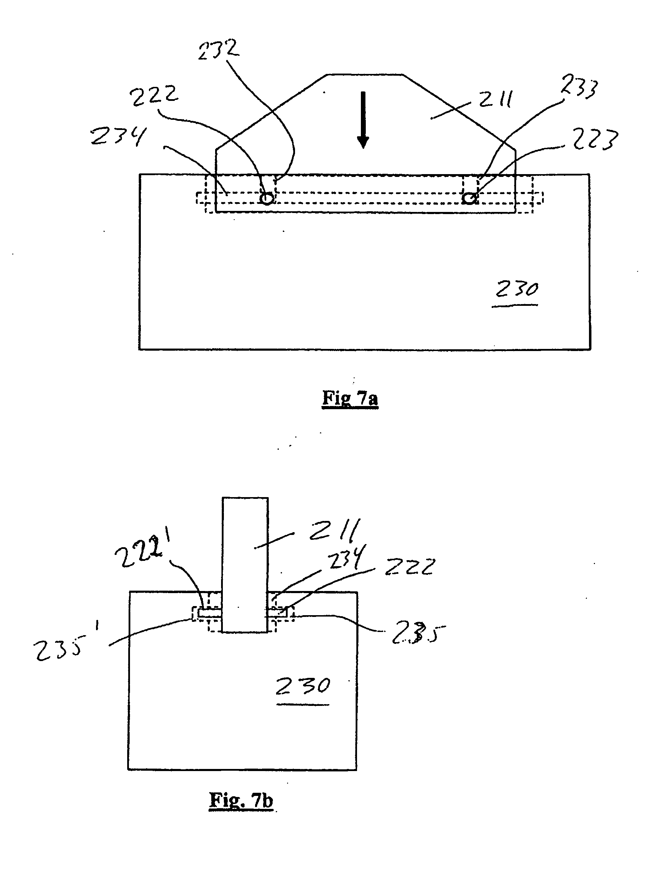

See also Fig. 7a where the yoke 211 has been entered into the 234, and the fixation means 222, 223 has been entered into open top recesses 232, 233 respectively. Fig. 7b discloses the fixation means 222 and its opposite fixation means 222' in position inside the recesses 235, 235' respectively in the anode 230.

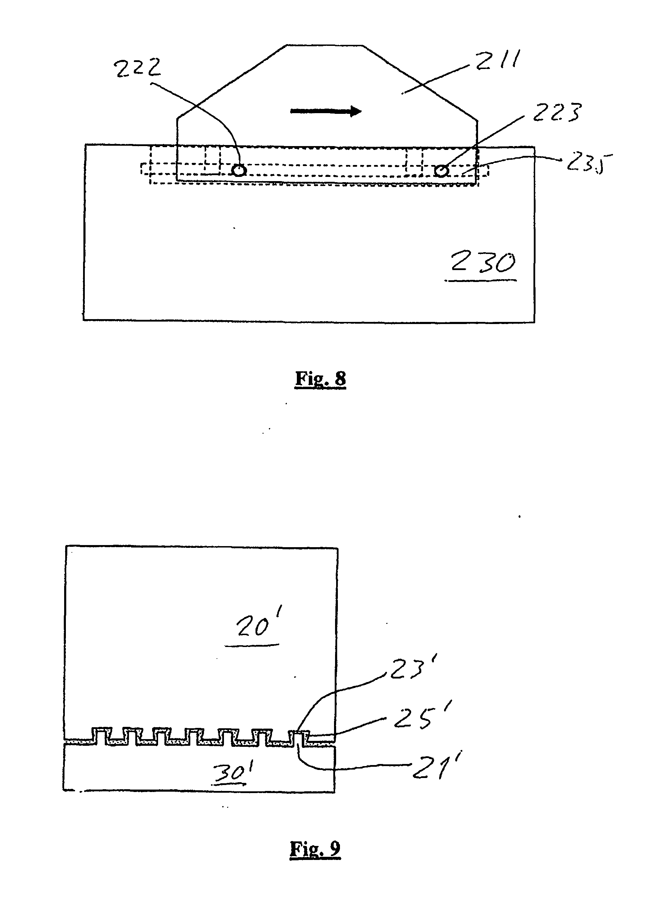

In Fig. 8 the yoke 211 has been moved laterally versus the anode 230 and the fixation means 222, 223 has been moved to a part of the recess 235 that is top closed with regard to the fixation means 222, 223. This fixation principle can be denoted put-slide.

The space between the yoke 211 and the non-occupied part of the recess 234 is then filled with electric conductive particles, such as steel shots.

It should be understood that the recesses 234, 235, 235' may be dovetail shaped, i.e have an undercut shape.

The fixation means 222, 223 in the above example consist of cylindrical rods that are entered into a bore through the yoke part 211. These rods can be fixed by a press-fit arrangement, and arranged for easy removal and exchange.

In an alternative, the shape of the fixation means can be flattened, i.e. having a more extended, planar surface acting against the recess in the anode.

The main part of the recess may be formed while the anode is in its green condition, i.e. before it is calcinated. Then the recess can be calibrated by a rotating processing tool, either having a shape complementary to the final shape of the recess or having a dimension mince than that of the final shape. The tool can be arranged to fit a CNC machine or the similar, thus the machining (processing) will be performed in an automised manner. In the machining process at least one of the top recesses 232, 233 is made and subsequently the tool is moved along inside the electrode to make the recess 234. The recess can also be processed in a similar manner as stated above, even when there has been no pre-forming of the recess in green condition of the electrode.

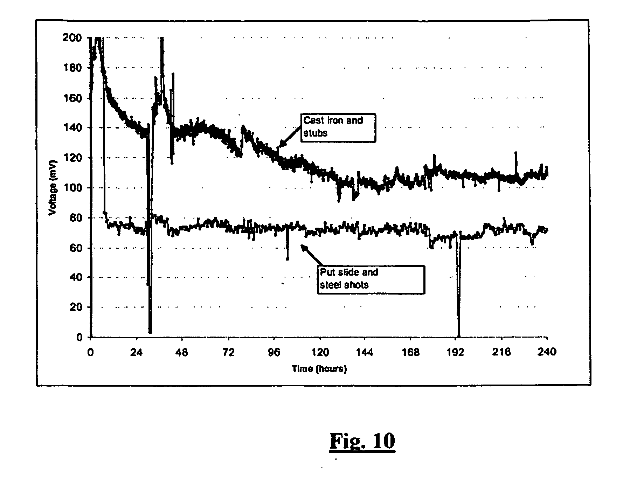

In Fig. 10 there is disclosed two curves that monitor the voltage drop versus time in a conventional yoke (with studs) and anode connection based upon a cast iron, and the present put-slide yoke connection with steel shots as shown in Fig. 8. The measurements in both cases have been taken in the yoke/nipple part 10 cm above the anode block, and at the surface of the anode block 10 cm offset in the transversal direction with regard to the yoke/nipples.

From Figure 10 it can be seen that after a period of time, for instance approximately 200 hours, the voltage drop in the embodiment as shown in Fig. 8 was measured to be in the interval 60-80mV. The voltage drop in the conventional nipple/anode connection was measured to be in the interval 100-110mV.

Fig. 9 discloses an end-view of a cathode 20' having recesses or slots 23' in its lower part (only one of seven described here). Similar to the embodiment of Figs. 4a-b, there are arranged collector elements 21' into the slots, where the remaining space 25' is filled with electric conductive particles. The collector elements 21' are in this embodiment fixed to a collector plate 30' that collects the current and secures stability.

In an alternative, the collector elements 21' can in part or in total be excluded, and the slots 23' filled with conductive particles that generates an electrical connection with the collector plate 30'.

Advantageously, the cathode 20' and the collector plate 30' are tilted somewhat under the filling procedure of the particles, to allow the particles to fill the recess in a smooth manner.

The recesses or slots 23' can be made by a process similar to that as stated above. In calcinated condition the recesses can be made by a process equipment comprising one or more rotating saw blades entered into the cathode, and then initialising a mutual movement between the cathode and the process equipment.

It should be understood that the electrical conducting solids or particles can be of any appropriate metal such as steel, iron, copper, aluminium etc., or alloys of same. Further, the shape of the solids can be spherical, oval or elliptic, flaked, or have any appropriate shape. The size and particle distribution may vary. The maximum size will in general be restricted by the space to be filled. A non-homogenous distribution of particle sizes may be convenient to obtain a compact filling as possible, with little space between the particles.

Apart from having good electrical conducting properties, the applied material should have good mechanical properties (crushing properties) and be able to sustain high temperatures. As mentioned later, magnetic properties may be advantageous.

Further, the size of said solids can be from 0,1 millimetres and close to the minimum opening between the stud and the wall of the bore/recess in the anode. Commonly, the size may be up to 10 millimetres. Similar dimensions of the solids can be applied in a cathode element, where the dimension is determined by the opening between the collector bar and the wall of the slot.

The electrical conducting particles can be stored in a container or in an appropriate storage at a higher level than the recess in the electrode to be filled. A tube fastened to this container with a valve and an appropriate opening towards the slot could regulate the correct amount of particles into the slot. Thus the transport and distribution can be performed by gravity feed. Under filling, vibration can be applied to obtain a more compact filling. The electrode and/or the yoke/collector bar can be vibrated. In an alternative a vibrating stick can be applied in the recess filled with conductive particles, to generate vibration directly of the filled-in material.

Trials that have been done with anodes having steel sand (small iron particles) as filled-in material shows that after approximate 12 hour of operation, the particles becomes a somewhat pasty and "glue" together. At the same time the agglomeration of particles seem to have a certain mechanical strength. With regard to suspended anodes, this effect will advantageously assist the mechanical fixation of the yoke to the anode. The mentioned effect has not been fully understood, but the temperatures and possibly the expansion of the actual part of the anode yoke in the recess and the fill-in material may generate a process similar to that of sintering the material.

Further, commonly used collar paste for anodes or other protecting substance may be used to make an encapsulating and protective layer at the top of the electrical conducting particles. Similar will apply for cathodes.

Worn out anodes can commonly be handled in a rodding station where the butts is removed from the yoke (after removal of any anode covering material). Preferably the butts is cracked in a manner where it falls off mainly in two pieces divided along the direction of its fixation. Otherwise it can be crushed or knocked off the hanger. The butts is conventionally put on a conveyer.

In cases where there have been applied magnetic conductive particles as fill-in material, the anode yoke is preferably magnetized by appropriate means, whereby the particles will be attracted to the yoke during the butts removal.

After the butts has been removed, the yoke is preferably moved to an other part of the rodding station for recovery of the fill-in material. Then the yoke can be de-magnetized to let the particles come off. Any remaining particles on the previously embedded part of yoke can be removed by simple mechanical methods such as scraping, as the particles come off easily.

As a final cleaning step, the previously embedded part of the yoke can be blasted (as by sand blasting) preferably by means of a particles of the same type as or that is compatible with the actual fill-in material such as iron, steel or any other electrical conductive material. Apart from this blasting can be carried out by sand, alumina, or any other appropriate material.

Commonly, the butts will be transported to an electrode paste plant or the similar. Before it leaves the rodding station, or close to it, it can be advantageous to separate remaining fill-in material from the butts. In case using magnetic fill-in material, this material can be separated from the butts in a magnetic separation station. For instance, the butts can be transported on a conveyer close to one or more magnetized elements that attract magnetic particles from the butts. Preferably, the butts is shaked or rattled during this process. The magnetized elements can be de-magnetized in periods to let the particles come off, and the particles can be re-used as fill-in material, after possible crushing of particle clusters and a classification of the particle material.

It should be understood that non-magnetic fill-in materials can be recovered and re-used as well, even if the separation and recover technology would be somewhat different than that described above. A sort of sieve may be applied to separate butts from fill-in material.

The recovered fill-in material may come off as clusters of particles. These clusters may need to be crushed down to more or less single particles to be re-used as fill-in material determined by the opening of the actual recess to be filled. The crushing can be done by adapting conventional apparatus.

The above mentioned recovery of fill-in material has been explained by an electrode used as an anode. However, a similar separation process that combines appropriate steps can be applied to cathodes as well.

In the assembly of an electrode, it may be advantageous to apply a graphite suspension onto the electrical leads to be embedded into the carbonaceous material. This is commonly done by cast-iron connections.

Mixing in some dry powder of for instance graphite in the fill-in material may be advantageous. This can assist the removal, i.e. recovery of the fill-in material in the butts station.

## Claims

1. An electrode for use in an electrolysis process for production of aluminium, the electrode comprises a body of calcinated carbonaceous material connected with an electrical current lead, where said current lead is embedded in a recess in said carbonaceous body, the recess being wider than the lead and being filled with an electric conductive material,
**characterised in that**
the electric conductive material consists only of conductive particles and that the current lead and the body of calcinated carbonaceous material are connected by mechanical fixation means.

2. An electrode in accordance with claim 1,
**characterised in that**
the particles have a spherical form.

3. An electrode in accordance with claim 1,
**characterised in that**
the particles have an oval or elliptic form.

4. An electrode in accordance with claim 1,
**characterised in that**
the electric conductive material comprises magnetic particles.

5. An electrode in accordance with claim 1,
**characterised in that**
the particles are made out of iron or an iron alloy.

6. An electrode in accordance with claim 1,
**characterised in that**
the particles are made out of steel or a steel alloy.

7. An electrode in accordance with claim 1,
**characterised in that**
the electrode is a cathode block.

8. An electrode in accordance with claim 7,
**characterised in that**
the cathode block has plural recesses in its bottom part, facing a collector plate (30')

9. An electrode in accordance with claim 1,
**characterised in that**
the electrode is an anode block.

10. An electrode in accordance with claim 9,
**characterised in that**
the anode block is secured to the current lead by means of a spike, bolt or the like interconnecting said parts.

11. An electrode in accordance with claim 9,
**characterised in that**
the anode block is secured to the current lead by protruding fixation means on the current lead and one or more recesses arranged in the anode.

12. An electrode in accordance with claim 11,
**characterised in that**
protruding fixation means (222) on the current lead mate corresponding open top recess(-es) (232) in the anode block and lock in a position of a recess (235) that communicates with the recess(-es) (232), where the recess (235) is top closed with regard to the fixation means (222).

## Patentansprüche

1. Elektrode zum Gebrauch in einem Elektrolyseprozess zur Produktion von Aluminium, wobei die Elektrode einen Körper aus kalziniertem kohlenstoffhaltigem Material umfasst, der mit einer elektrischen Stromzuleitung verbunden ist, wobei die Stromzuleitung in einer Aussparung in dem kohlenstoffhaltigen Körper eingelassen ist, wobei die Aussparung breiter als die Zuleitung ist und mit einem elektrisch leitenden Material gefüllt ist,
**dadurch gekennzeichnet, dass**
das elektrisch leitende Material nur aus leitenden Partikeln besteht, und dass die Stromzuleitung und der Körper aus kalziniertem kohlenstoffhaltigem Material durch mechanische Befestigungsmittel verbunden sind.

2. Elektrode nach Anspruch 1,
**dadurch gekennzeichnet, dass**
die Partikeln eine Kugelform aufweisen.

3. Elektrode nach Anspruch 1,
**dadurch gekennzeichnet, dass**
die Partikeln eine ovale oder elliptische Form aufweisen.

4. Elektrode nach Anspruch 1,
**dadurch gekennzeichnet, dass**
das elektrisch leitende Material magnetische Partikeln umfasst.

5. Elektrode nach Anspruch 1,
**dadurch gekennzeichnet, dass**
die Partikeln aus Eisen oder einer Eisenlegierung hergestellt sind.

6. Elektrode nach Anspruch 1,
**dadurch gekennzeichnet, dass**
die Partikeln aus Stahl oder einer Stahllegierung hergestellt sind.

7. Elektrode nach Anspruch 1,
**dadurch gekennzeichnet, dass**
die Elektrode ein Kathodenblock ist.

8. Elektrode nach Anspruch 7,
**dadurch gekennzeichnet, dass**
der Kathodenblock mehrere Aussparungen in seinem unteren Teil aufweist, die einer Kollektorplatte (30') zugekehrt sind.

9. Elektrode nach Anspruch 1,
**dadurch gekennzeichnet, dass**
die Elektrode ein Anodenblock ist.

10. Elektrode nach Anspruch 9,
**dadurch gekennzeichnet, dass**
der Anodenblock an der Stromzuleitung mithilfe eines Dorns, eines Bolzens oder dergleichen befestigt ist, der die Teile miteinander verbindet.

11. Elektrode nach Anspruch 9,
**dadurch gekennzeichnet, dass**
der Anodenblock an der Stromzuleitung durch vorstehende Befestigungsmittel an der Stromzuleitung und einer oder mehr Aussparungen in der Anode befestigt ist.

12. Elektrode nach Anspruch 11,
**dadurch gekennzeichnet, dass**
vorstehende Befestigungsmittel (222) an der Stromzuleitung mit (einer) entsprechenden Aussparung(en) (232) im Anodenblock zusammenpassen wobei die Aussparung (en) (232) nach oben offen ist, und in einer Position einer Aussparung (235) sperren, die mit der (den) Aussparung(en) (232) in Verbindung steht, wobei die Aussparung (235) bezüglich der Befestigungsmittel (222) oben geschlossen ist.

## Revendications

1. Électrode destinée à être utilisée dans un procédé d'électrolyse pour la production d'aluminium, l'électrode comprenant un corps de matière carbonée calcinée, relié à un fil conducteur de courant électrique, sachant que le fil conducteur est encastré dans une cavité dans le corps carboné, la cavité étant plus large que le fil conducteur et étant remplie d'un matériau conducteur d'électricité,
**caractérisé en ce que**
le matériau électriquement conducteur est constitué uniquement de particules conductrices et que le fil conducteur et le corps de matière carbonée calcinée sont reliés par un moyen de fixation mécanique.

2. Électrode selon la revendication 1,
**caractérisée en ce que**
les particules ont une forme sphérique.

3. Électrode selon la revendication 1,
**caractérisée en ce que**
les particules ont une forme ovale ou elliptique.

4. Électrode selon la revendication 1,
**caractérisée en ce que**
le matériau conducteur d'électricité comprend des particules magnétiques.

5. Électrode selon la revendication 1,
**caractérisée en ce que**
les particules sont faites de fer ou d'un alliage de fer.

6. Électrode selon la revendication 1,
**caractérisée en ce que**
les particules sont faites d'acier ou d'un alliage d'acier.

7. Électrode selon la revendication 1,
**caractérisée en ce que**
l'électrode est un bloc cathodique.

8. Electrode selon la revendication 7,
**caractérisée en ce que**
le bloc cathodique présente plusieurs cavités dans sa partie inférieure, face à une plaque collectrice (30').

9. Électrode selon la revendication 1,
**caractérisée en ce que**
l'électrode est un bloc anodique.

10. Électrode selon la revendication 9,
**caractérisée en ce que**
le bloc anodique est fixé au fil conducteur au moyen d'un crampon, d'un boulon ou similaire interconnectant ces parties.

11. Électrode selon la revendication 9,
**caractérisée en ce que**
le bloc anodique est fixé au fil conducteur par un moyen de fixation en saillie sur le fil conducteur et une ou plusieurs cavité(s) agencée(s) dans l'anode.

12. Électrode selon la revendication 11,
**caractérisée en ce que**
le moyen de fixation en saillie (222) sur le fil conducteur est complémentaire d'une/de cavité(s) supérieure(s) ouverte(s) (232) dans le bloc anodique et se verrouille dans une position d'une cavité (235) qui communique avec la/les cavité(s) (232) où la cavité (235) est fermée sur le dessus par rapport au moyen de fixation (222).
